# EUROPEAN PATENT SPECIFICATION

(11) **EP 0 617 773 B1**
(45) Date of publication and mention of the grant of the patent: **02.09.1998**
(21) Application number: 93923620.4
(22) Date of filing: 26.10.1993
(51) Int. Cl.: F16F 15/12, F16F 15/16, F16F 9/30

(54) **A TWIN MASS FLYWHEEL**
ZWEIMASSENSCHWUNGRAD
VOLANT D'INERTIE DOUBLE

(30) Priority: 27.10.1992 GB 9222560
(43) Date of publication of application: 05.10.1994
(60) Divisional application: 97120686.7
(73) Proprietor: AUTOMOTIVE PRODUCTS PLC, Leamington Spa Warwickshire CV31 3ER (GB)
(72) Inventor: CURTIS, Anthony John, Warwickshire CV31 1RU (GB); MURPHY, Robert John, Leamington Spa CV31 2HP (GB)
(74) Representative: Morrall, Roger
(86) International application number: GB9302203
(87) International publication number: WO9410477

(56) References cited:
- EP-A- 0 450 405
- WO-A-89/01097
- DE-A- 3 628 774
- FR-A- 2 637 339
- FR-A- 2 685 043
- GB-A- 2 220 464
- GB-A- 2 265 437
- DATABASE WPI Week 8035, Derwent Publications Ltd., London, GB; AN 80-61213C & JP,A,55 092 800 (MATSUSHITA ELEC IND KK) 15 July 1980

## Description

The present invention relates to a twin mass flywheel arrangement for absorbing or compensating for torsional vibrations such as can arise in a vehicle transmission assembly.

More particularly, the invention relates to a twin mass flywheel according to the preamble of claim 1 as it is described in WO 89/01097.

A problem arises due to the pivotal linkage striking one of the flywheel masses at extremes of relative rotation, thereby causing noise.

The present invention seeks to overcome the above problem.

According to the invention there is provided a twin mass flywheel for a vehicle comprising two co-axially arranged flywheel masses which are mounted for limited angular rotation relative to each other; a plurality of pivotal linkage interconnecting the two flywheel masses each linkage comprising a first link pivotally connected to one of the flywheel masses, a second link pivotally connected to the other of the flywheel masses, and a pivot for pivotally connecting the first and second links, said linkage having a greater mass adjacent the pivot to move outwardly; and a damping means which in use resists relative rotation between the two flywheel masses, characterised in that the damping means is a viscous damping means in the form of an annular cavity filled with viscous non-newtonian material and the pivotal linkages are capable of moving through the viscous material thereby forming said viscous damping means.

Preferably one flywheel mass comprises a first annular plate with a radially outer cylindrical wall forming the annular cavity, and the other flywheel mass comprises a second annular plate which encloses the cavity with the pivotal linkage housed within the cavity.

Conveniently each pivot is housed in an individual chamber located in the cavity, and the cavity or chambers are filled with a viscous grease.

In addition to the damping means defined in claim 1, the viscous damping means comprises two relatively rotatable parts, one part being rotatable with one flywheel mass and the second part being rotatable with the other flywheel mass, and a viscous fluid is located in a chamber formed by at least one of said parts so as to act as a further viscous damper between said parts to oppose relative rotational movement therebetween.

For a better understanding of the present invention and to show more clearly how to carry it into effect reference will now be made, by way of example, to the accompanying drawings in which;
Figure 1 is a cross-sectional view of one embodiment of a twin mass flywheel according to the present invention taken along the line 1-1 in Figure 2;
Figure 2 is a part sectional view of the twin mass flywheel in Figure 1;
Figure 3 and Figure 4 are similar views to that in Figure 2 showing the flywheel at its extremes of movement;
Figure 5 is a section through an alternative seal arrangement for use in the flywheel arrangement shown in figures 1 to 4.
Figure 6 is a cross-sectional view through an additional form of viscous damping means;
Figure 7 is a partial cross-sectioned view similar to Figure 1 but showing the additional viscous damping means at the centre of the twin mass flywheel;
Figure 8 is a plan view of the viscous damping means taken on the line VIII-VIII of Figure 7, and
Figures 9 is similar to Figure 8 but showing alternative forms of arcuate fluid chamber.

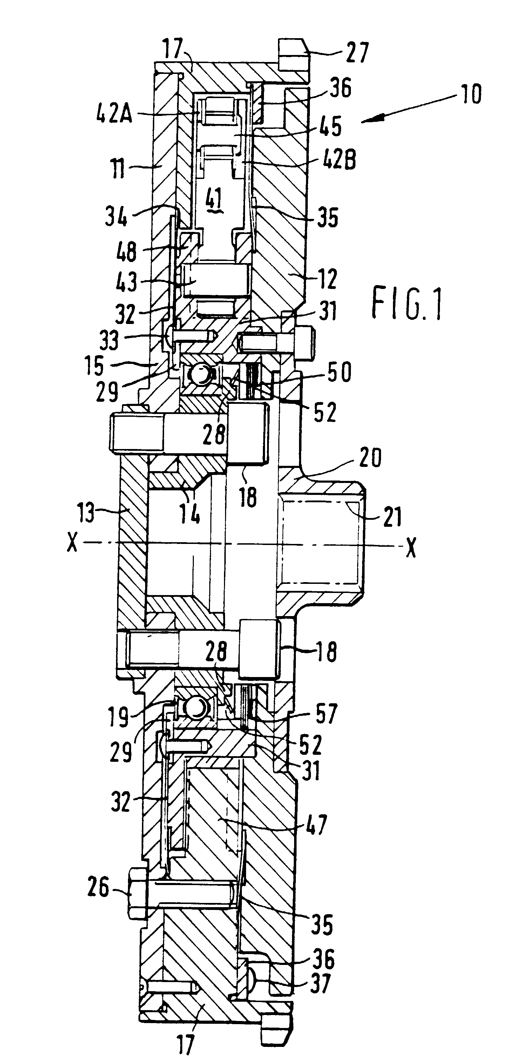

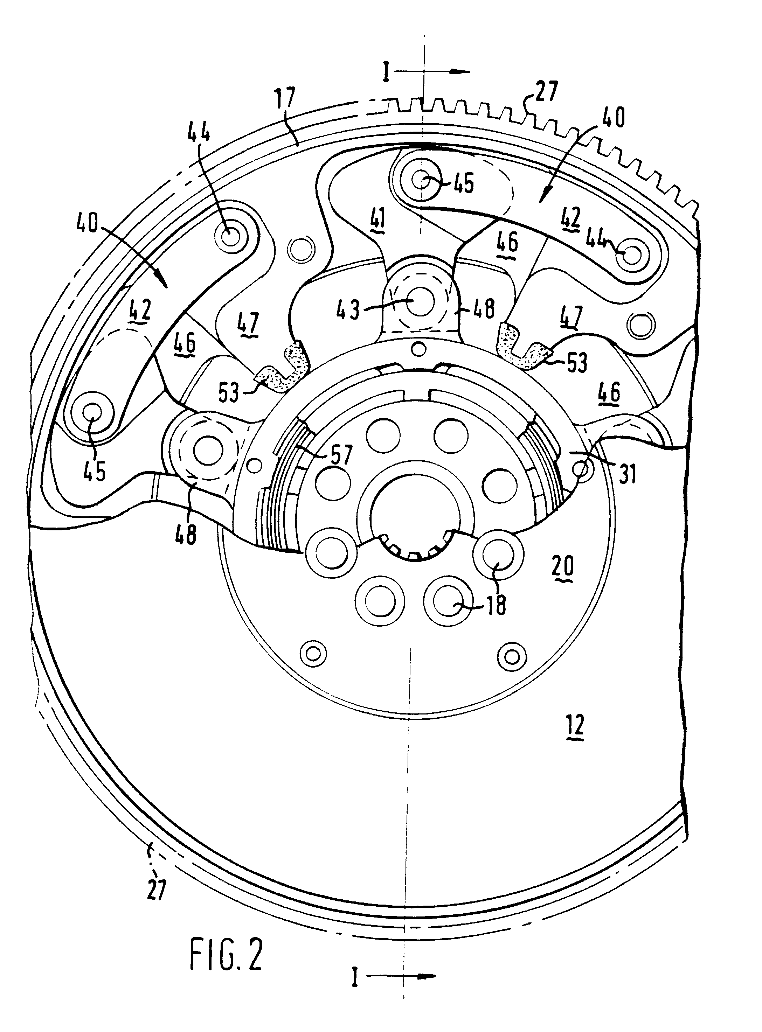

With reference to Figures 1 & 2 of the accompanying drawings there is illustrated a twin mass flywheel 10 comprising a flywheel which is divided into two flywheel masses 11 and 12. One flywheel mass 11 is fixed on a flange 13 of a crankshaft of an internal combustion engine (not shown) by way of a central hub 14 and bolts 18, and an output member 20 having splines 21 thereon is secured to the other flywheel mass 12. Alternatively a clutch could be secured to the second flywheel mass 12. Under normal drive conditions the flywheel masses 11, 12 rotate in a clockwise direction in the view shown in Figure 1. The flywheel mass 12 is mounted on the central hub 14 via a bearing 19.

The flywheel mass 11 comprises the hub 14 which is fixed on the crankshaft, an annular plate 15 fixed to the hub 14 by the bolts 18 and an annular outer mass 17 fixed to plate 15 by bolts 26 as shown in Figure 1, or for example, by rivets (not shown). A starter ring 27 is mounted on outer mass 17. The annular plate 15, hub 14, and outer mass 17 form an annular cavity.

The second flywheel mass 12 forms an end plate for enclosing the said cavity and is mounted rotatably to the first flywheel mass 11 by way of the bearing 19. The bearing 19 is non-rotatably mounted on the hub 14 and is secured in place between a flange 28 on the hub and the plate 15. The outer race of the bearing 19 is non-rotatably mounted in the centre of the flywheel mass 12 and is secured in place by means of a retaining ring 29.

Relative rotation between the two flywheel masses 11 and 12 is controlled by a plurality of pivotal linkages 40 evenly spaced around the flywheel masses, preferably there are five such linkages, and by friction damping means 50. Each pivotal linkage 40 comprises a first link 41 pivotally mounted on a lug 48 on a centre hub portion 31 of the flywheel mass 12 by way of a pivot 43 and a second link 42 pivotally mounted on the flywheel mass 11 by way of pivot 44, the two links 41 and 42 being pivotally connected to each other by means of a third pivot 45. It will be noted from Figure 1 that the pivot 43 is positioned radially inwardly of the pivots 44 and 45. The first link 41 is formed as a bob weight mass having a greater mass at its end remote from the pivot 43. The second link 42 comprises a pair of parallel arms 42A, 42B which are arranged one on each axial side of the bob weight 41.

The cavity formed by the first flywheel mass 11 is divided into five chambers 46 by partition walls 47 that extend inwardly from the outer mass 17 to a position adjacent the centre hub portion 31 of the second flywheel mass 12. A pivotal linkage 40 is located in each chamber 46.

The friction damping means 50 a stack of friction washers 57, in which alternate friction washers 57 are driven by the hub 14 of the first flywheel mass 12, and the hub portion 31 of the second flywheel mass 12. The washers 57 are urged together by a Belleville spring 52.

The radially inner ends of the partition walls 47 are covered by an elastomer seal 53 which acts as a partial seal against the hub portion 31 of the second flywheel mass.

The chambers 46 between the partition walls 47 are filled with a viscous non-newtonian medium, preferably a medium grease having a NLGI rating of 2-3 (National Lubrication Grease Institute of America). A suitable viscous material is available from Century Oils under the trade reference Luplex S2, this is a synthetic oil based grease filled with a lithium soap complex.

The chambers 46 are sealed at their axial ends (axial with respect to the axis X of rotation of the flywheel)

A first resilient seal 32 is fixed to the hub portion 31 of the second flywheel mass 12 by screws 33, which also serve to hold the retaining ring 29 in position. The resilient seal 32 is preferably a sheet metal annular diaphragm the radially outer edge of which engages the annular plate 15.

A second resilient seal 35 is fixed to outer annular mass 17 on its side adjacent the second flywheel mass 12. The resilient seal 35 is also a sheet metal annular diaphragm the radially outer portion of which is secured to the first flywheel mass by a sealing ring 36 and fixings 37, and the inner edge of which engages the second flywheel mass 12. Thus the grease in each chamber 46 is held in the chamber by the seals 32, 35 and 53.

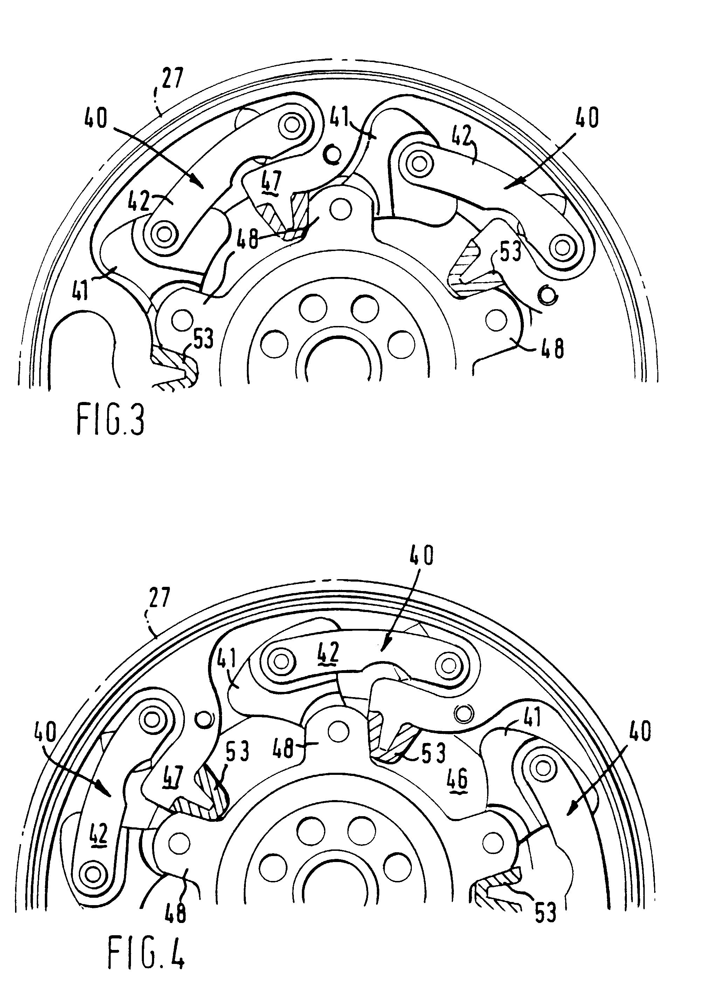

The seals 53 also act as bump stops at extremes of relative rotational movement of the two flywheel mass 11, 12 in both directions of rotation (see Figures 3 and 4)

Operation of the twin mass flywheel shown in Figure 1 to 3 will now be described. Under no-load conditions, with the engine rotating at high speeds centrifugal force acts on the pivotal linkages 40 and particularly on the bob weights 41 and urges the linkages in a radially outward direction. At higher rotational speeds the centrifugal force is greater and whilst this does not affect the configurations it greatly affects the force required to move the flywheel mass 12 relative to the flywheel mass 11.

If the clutch is engaging or is engaged and torque is transmitted from the engine to the flywheel mass 11 and then to flywheel mass 12 there is a tendency for the two masses to rotate relative to each other. At relatively low speeds when the influence of centrifugal force is small the flywheel masses move readily relative to each other. However at relatively high speeds the influence of centrifugal force is much greater and relative rotation of the flywheel masses requires greater force. In extreme drive conditions as shown in Figure 3 the linkages 40 are stretched and the seal 53 abuts one side of a lug 48.

Under conditions of over-run the effects are similar except that in the embodiments described the link 42 folds under the bob weight 41, as shown in Figure 4.

Again the wall 47 and seal 53 form a travel stop against the lugs 48 and prevent further relative movement of the flywheel masses.

Since the chambers 46 are filled with grease then the movement of the pivotal linkages 40 between the two extremes, Figure 3 and Figure 4, is damped by the grease, in that the grease provides resistance to the movement of the linkages and must flow around the bob weights 41 as they move through the respective chambers 46. Wall 47 could have oil or grease passageways in its surface adjacent to seal 32 to provide the desired flow and damping level.

The seals 53 may not be perfect seals but serve to restrict the flow of grease between adjacent chambers.

The seal 53 could have oil passageways formed therein to provide a desired grease flow and hence desired damping characteristics. For example, the seal section 53 could be formed such that the damping material can be more easily moved from chamber to chamber in a preferred direction. This could enable, for example, the damping control of the relative rotation of the flywheel massess in the drive direction to be greater than the control in the overrun direction.

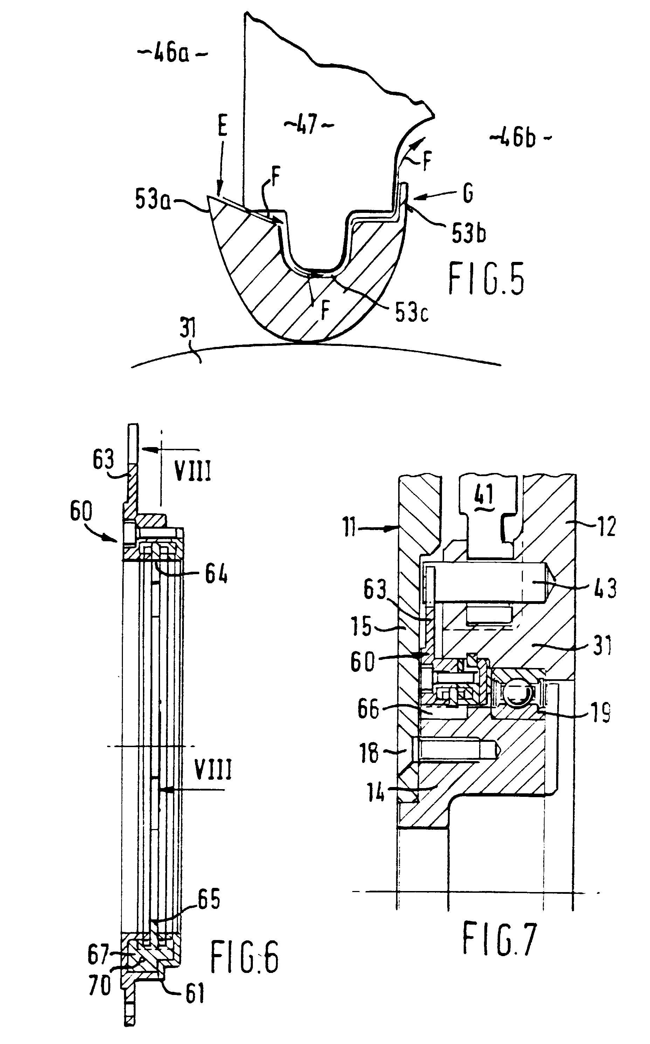

Figure 5 shows a seal arrangement in which seal 53 is provided with a one way flap valve in the form of an exposed projection 53a on one side of the seal and a flap portion 53b on the other side of the seal. A passage way 53c in seal 53 allows flow around the wall 47 from chamber 46a to chamber 46b when the pressure in chamber 46a acting on projection 53a deflects projection 53a away from wall 47 as indicated diagrammatically by arrow E. This opens up passageway 53c so that damping material can flow between wall 47 and flap portion 53b as indicated by arrows F in Figure 5. Flow in the reverse direction is prevented by the pressing of flap portion 53b against the wall 47 by locally high pressure in chamber 46b as indicated diagrammatically by arrow G.

The clearances between the links 41 and 42 and the adjacent plate 15 and seal 35 can be designed to provide further damping of the movement of links 41 and 42 as the damping material is forced through these clearances. The surfaces of the links adjacent plate 15 and seal 35 may be grooved or ridged to modify the above damping effect.

With reference to Figures 6-8, a self contained viscous fluid damper 60 is arranged to act between the two flywheel mass 11 and 12.

The fluid damper 60 is an annular damper which is located in an annular space formed between the annular plate 15, the hub 14, and the bearing 19.

The viscous damper 60 has a first outer annular part 61 having an annular fluid chamber 62 formed therein and an inner part 64 which is rotatable relative to the outer part 61. The outer part 61 has a flange 63 which is made rotationally fast with the second flywheel mass 12 by the pivot pins 43. The inner part 64 is annular having lugs 65 on its inner periphery for engaging slots 66 on the first flywheel mass 11, and paddles 67 projecting radially outwardly for circumferential movement in the chamber 62.

The annular chamber 62 may be subdivided into arcuate cavities 62A, in each of which a paddle 67 is located. The cavities 62A are filled with viscous fluid, preferably silicone fluid, and the paddles are caused to move through the cavities as the two flywheel mass rotate relative to each other. The movement of the fluid around and against the paddles provides some viscous damping to the movement of the two flywheel masses.

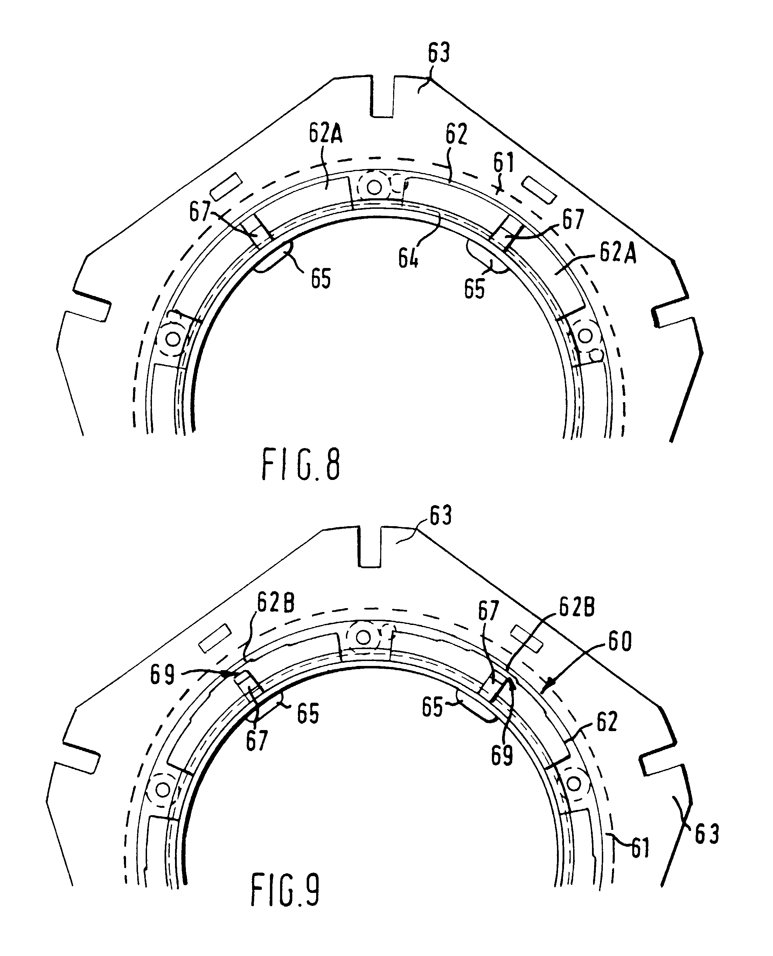

Figure 9 shows modified cavities 62B in which the clearances 69 around the paddles 67 have been increased to provide differing flow characteristics and have different damping characteristics. A hole 70 (see figure 6) may be provided in the faces of the paddles 67 to also provide specific damping characteristics.

The self contained viscous damper arrangement shown in Figure 6 to 9 can be used in addition to the damping effect of the movement of the pivotal linkages 40 in the chambers 46 described above.

A further material suitable for damping in accordance with the present invention is a two-part low strength gel such as General Electric RTV 6166 Polysiloxane. This material is poured into the chambers containing the pivotal linkages or the paddles when in liquid form and then changes state to a gel over a period of approximately 24 hours. This gel tends to chain and string its molecules when worked and thus provides the required damping characteristics.

## Claims

1. A twin mass flywheel (10) for a vehicle comprising two co-axially arranged flywheel masses (11,12) which are mounted for limited angular rotation relative to each other; a plurality of pivotal linkages (40) interconnecting the two flywheel masses each linkage comprising a first link (41) pivotally connected to one (12) of the flywheel masses, a second link (42) pivotally connected to the other (11) of the flywheel masses, and a pivot (45) for pivotally connecting the first and second links, said linkage having a greater mass adjacent the pivot (45) to move outwardly; and a damping means which in use resists relative rotation between the two flywheel masses (11,12), characterised in that the damping means is a viscous damping means (40,46,53) in the form of an annular cavity filled with viscous non-newtonian material and the pivotal linkages (40) are capable of moving through the viscous material thereby forming said viscous damping means.

2. A twin mass flywheel as claimed in Claim 1 in which one flywheel mass (11) comprises a first annular plate (15) with a radially outer cylindrical wall (17) forming the annular cavity, and the other flywheel mass (12) comprises a second annular plate which encloses the cavity with the pivotal linkages (40) housed within the cavity.

3. A twin mass flywheel as claimed in Claim 2 characterised in that each pivotal linkage (40) is housed in an individual chamber (46) located within the annular cavity.

4. A twin mass flywheel as claimed in Claim 3 characterised in that the chambers (46) are separated from each other by partition walls (47) formed on said one flywheel mass (11), each wall having an elastomeric seal (53) on the radially inner end thereof which acts against the other flywheel mass (12) to restrict the flow of viscous material between the chambers.

5. A twin mass flywheel as claimed in claim 4 characterised in that the seal (53) includes a flow path (53c) between adjacent chambers (46a, 46b), the flow path being controlled by a flap valve portion (53b) of the seal to allow flow in one direction (F) only between the chambers.

6. A twin mass flywheel as claimed in any one of Claims 2 to 5 characterised in that a first resilient sealing means (32) acts between said other flywheel mass (12) and the first annular plate (15), and a second resilient seal means (35) acts between said one flywheel mass (11) and the second annular plate to seal the axial ends of the cavity.

7. A twin mass flywheel as claimed in Claim 6 characterised in that the two seal means are spring steel diaphragms (32,35).

8. A twin mass flywheel as claimed in any one of claims 1 to 7 characterised in that a friction damping means (50) is also operable between the two flywheel masses (11,12) the friction damping means comprising a pack of friction washers (57), some of said washers being driven by said one flywheel mass and the other washers being driven by said other flywheel mass.

9. A twin mass flywheel as claimed in any one of Claims 1 to 8 characterised in that one link (41) of each pivotal linkage (40) has a greater mass than the other link (42) so that said one link (41) acts as a bob weight.

10. A twin mass flywheel as claimed in Claim 4 and any one of Claims 5 to 9 when dependant upon claim 4 characterised in that the elastomeric seals (53) also act as bump stops for cushioning any abutment between the two flywheel masses (11, 12)

11. A twin mass flywheel as claimed in claim 1 characterised in that a further viscous damping means comprises two relatively rotatable parts (61,64) one part (61) being rotatable with one flywheel mass (12) and the second part (64) being rotatable with the other flywheel mass (11), and a viscous damping medium is located in a chamber (62) formed by at least one of said parts so as to provide viscous damping between said parts to oppose relative rotational movement therebetween.

12. A twin mass flywheel as claimed in Claim 11 characterised in that said one part (61) of the further viscous damping means provides an annular fluid chamber (62) and said second part (64) is an annular plate having paddles (67) attached to the outer periphery thereof, the paddles being moveable through the annular chamber (62).

13. A twin mass flywheel as claimed in Claim 12 characterised in that in the annular chamber (62) is subdivided into arcuate cavities 62A and each paddle (67) is located in a respectively cavity.

14. A twin mass flywheel as claimed in any one of claims 11 to 13 characterised in that said one part (61) has a radially outward flange (63) for attachement to one flywheel mass (12), and the said second part (64) has radially inwardly projecting lugs (65) for attachement to the other flywheel mass (11).

15. A twin mass flywheel as claimed in any one of Claims 2-14 characterised in that the viscous material is a grease having an NLGI rating in the range of 2 - 3.

16. A twin mass flywheel as claimed in Claim 15 characterised in that the grease is a synthetic grease which is filled with a lithium soap complex.

17. A twin mass flywheel as claimed in any one of claims 2 to 14 characterised in that viscous material is a gel.

18. A twin mass flywheel as claimed in any one of Claims 12 to 14 characterised in that the viscous material is a silicone fluid or silicone grease.

## Patentansprüche

1. Zweimassenschwungrad (10) für ein Fahrzeug, mit zwei koaxial angeordneten Schwungradmassen (11, 12), die eine begrenzte Drehbewegung relativ zueinander ausführen können; einer Vielzahl an Drehgelenkgetrieben (40), welche die beiden Schwungradmassen miteinander verbinden, wobei jedes Getriebe ein erstes Getriebeglied (41), das drehbar mit einer (12) der Schwungradmassen verbunden ist, ein zweites Getriebeglied (42), das drehbar mit der anderen (11) der Schwungradmassen verbunden ist, und einen Drehzapfen (45) zum drehbaren Verbinden des ersten und zweiten Getriebegliedes aufweist, wobei das Getriebe eine größere Masse neben dem Drehzapfen (45) hat, um sich nach außen zu bewegen; und einer Dämpfungseinrichtung, die im Gebrauch einer relativen Drehung zwischen den beiden Schwungradmassen (11, 12) entgegenwirkt, **dadurch gekennzeichnet**, daß die Dämpfungseinrichtung eine viskose Dämpfungseinrichtung (40, 46, 53) in Form eines mit einem viskosen nicht-newtonschen Material gefüllten ringförmigen Hohlraumes ist und die Drehgelenkgetriebe (40) in der Lage sind, sich durch das viskose Material zu bewegen, um dadurch die viskose Dämpfungseinrichtung zu bilden.

2. Zweimassenschwungrad nach Anspruch 1, bei dem eine Schwungradmasse (11) eine erste ringförmige Platte (15) mit einer radial äußeren zylindrischen Wand (17), welche den ringförmigen Hohlraum bildet, aufweist, und die andere Schwungradmasse (12) eine zweite ringförmige Platte aufweist, welche den Hohlraum umschließt, wobei die Drehgelenkgetriebe (40) in dem Hohlraum untergebracht sind.

3. Zweimassenschwungrad nach Anspruch 2, dadurch gekennzeichnet, daß jedes Drehgelenkgetriebe (40) in einer Einzelkammer (46) untergebracht ist, die innerhalb des ringförmigen Hohlraumes angeordnet ist.

4. Zweimassenschwungrad nach Anspruch 3, dadurch gekennzeichnet, daß die Kammern (46) durch Trennwände (47) voneinander getrennt sind, die an der einen Schwungradmasse (11) gebildet sind, wobei jede Wand eine elastische Dichtung (53) an ihrem radial inneren Ende hat, die auf die andere Schwungradmasse (12) einwirkt, um den Strom an viskosem Material zwischen den Kammern zu drosseln.

5. Zweimassenschwungrad nach Anspruch 4, dadurch gekennzeichnet, daß die Dichtung (53) einen Strömungsweg (53c) zwischen benachbarten Kammern (46a, 46b) aufweist, wobei der Strömungsweg von einem Klappenventilteil (53b) der Dichtung gesteuert wird, um eine Strömung nur in einer Richtung (F) zwischen den Kammern zuzulassen.

6. Zweimassenschwungrad nach irgendeinem der Ansprüche 2 bis 5, dadurch gekennzeichnet, daß eine erste elastische Dichtungseinrichtung (32) zwischen der anderen Schwungradmasse (12) und der ersten ringförmigen Platte (15) wirkt, und eine zweite elastische Dichtungseinrichtung (35) zwischen der einen Schwungradmasse (11) und der zweiten ringförmigen Platte wirkt, um die axialen Enden des Hohlraumes abzudichten.

7. Zweimassenschwungrad nach Anspruch 6, dadurch gekennzeichnet, daß die beiden Dichtungseinrichtungen Federstahlmembrane (32, 35) sind.

8. Zweimassenschwungrad nach irgendeinem der Ansprüche 1 bis 7, dadurch gekennzeichnet, daß eine Reibungsdämpfungseinrichtung (50) auch zwischen den beiden Schwungradmassen (11, 12) wirksam ist, wobei die Reibungsdämpfungseinrichtung ein Paket von Reibungsscheiben (57) aufweist, wobei einige der Scheiben von der einen Schwungradmasse angetrieben und die anderen Scheiben von der anderen Schwungradmasse angetrieben werden.

9. Zweimassenschwungrad nach irgendeinem der Ansprüche 1 bis 8, dadurch gekennzeichnet, daß ein Getriebeglied (41) eines jeden Drehgelenkgetriebes (40) eine größere Masse als das andere Gelenkglied (42) hat, so daß das eine Getriebeglied (41) als Gegengewicht wirkt.

10. Zweimassenschwungrad nach Anspruch 4 und irgendeinem der Ansprüche 5 bis 9, wenn auf Anspruch 4 zurückbezogen, dadurch gekennzeichnet, daß die elastischen Dichtungen (53) auch als Auflaufstopper wirken, um jegliches Aufeinanderstoßen der beiden Schwungradmassen (11, 12) abzufedern.

11. Zweimassenschwungrad nach Anspruch 1, dadurch gekennzeichnet, daß eine weitere viskose Dämpfungseinrichtung zwei relativ zueinander drehbare Teile (61, 64) aufweist, wobei ein Teil (61) mit einer Schwungradmasse (12) und das zweite Teil (64) mit der anderen Schwungradmasse (11) drehbar ist, und ein viskoses Dämpfungsmittel in einer Kammer (62) vorhanden ist, die von mindestens einem der Teile gebildet ist, um eine viskose Dämpfung zwischen den Teilen zu schaffen, um einer Relativdrehbewegung zwischen ihnen entgegenzuwirken.

12. Zweimassenschwungrad nach Anspruch 11, dadurch gekennzeichnet, daß das eine Teil (61) der weiteren viskosen Dämpfungseinrichtung eine ringförmige Flüssigkeitskammer (62) bereitstellt, und das zweite Teil (64) eine ringförmige Platte ist, an deren äußeren Rand Paddel (67) befestigt sind, wobei die Paddel durch die ringförmige Kammer (62) bewegbar sind.

13. Zweimassenschwungrad nach Anspruch 12, dadurch gekennzeichnet, daß die ringförmige Kammer (62) in zwei bogenförmige Hohlräume (62A) unterteilt ist, und jedes Paddel (67) in einem jeweiligen Hohlraum angeordnet ist.

14. Zweimassenschwungrad nach irgendeinem der Ansprüche 11 bis 13, dadurch gekennzeichnet, daß das eine Teil (61) einen radial äußeren Flansch (63) zur Befestigung an einer Schwungradmasse (12) hat, und das zweite Teil (64) radial nach innen vorstehende Ansätze (65) zur Befestigung an der anderen Schwungradmasse (11) hat.

15. Zweimassenschwungrad nach irgendeinem der Ansprüche 2 bis 14, dadurch gekennzeichnet, daß das viskose Material ein Fett ist, das einen NLGI-Wert im Bereich von 2 - 3 hat.

16. Zweimassenschwungrad nach Anspruch 15, dadurch gekennzeichnet, daß das Fett ein synthetisches Fett ist, das mit einem Lithiumseifenkomplex gefüllt ist.

17. Zweimassenschwungrad nach irgendeinem der Ansprüche 2 bis 14, dadurch gekennzeichnet, daß das viskose Material ein Gel ist.

18. Zweimassenschwungrad nach irgendeinem der Ansprüche 12 bis 14, dadurch gekennzeichnet, daß das viskose Material eine Silikonflüssigkeit oder ein Silikonfett ist.

## Revendications

1. Volant à double masse (10) pour un véhicule comprenant deux masses de volant (11) et (12) agencées coaxiales qui sont montées pour subir une rotation angulaire limitée l'une par rapport à l'autre ; une pluralité de tringleries pivotantes (40) reliant les deux masses de volant, chaque tringlerie comprenant une première biellette (41) fixée pivotante à une (12) des masses de volant, une seconde biellette (42) fixée pivotante à l'autre (11) des masses de volant, et un pivot (45) pour relier en pivotement la première et la seconde biellettes, ladite tringlerie ayant une masse supérieure adjacente au pivot (45) pour se déplacer vers l'extérieur; et un moyen d'amortissement qui en service s'oppose à la rotation relative entre les deux masses de volant (11) et (12), caractérisé en ce que le moyen d'amortissement est un moyen d'amortissement visqueux (40, 46, 53) ayant la forme d'une cavité annulaire contenant un matériau visqueux non newtonien et des tringleries pivotantes (40) capables de se déplacer à travers le matériau visqueux en formant ainsi ledit moyen d'amortissement visqueux.

2. Volant à double masse selon la revendication (1), dans lequel une masse de volant (11) comprend une première plaque annulaire (15) avec une paroi cylindrique (17) radialement vers l'extérieur formant la cavité annulaire, et l'autre masse de volant (12) comprend une seconde plaque annulaire qui ferme la cavité, les tringleries pivotantes (40) étant logées à l'intérieur de la cavité.

3. Volant à double masse selon la revendication (2), caractérisé en ce que chaque tringlerie pivotante (40) est logée dans une chambre individuelle (46) située dans la cavité annulaire.

4. Volant à double masse selon la revendication (3), caractérisé en ce que les chambres (46) sont séparées les unes des autres par des cloisons de séparation (47) formées sur ladite première masse de volant (11), chaque cloison ayant un joint en élastomère (53) a son extrémité radialement intérieure, lequel agit contre l'autre masse de volant (12) pour limiter l'écoulement du matériau visqueux entre les chambres.

5. Volant à double masse selon la revendication (1), caractérisé en ce que le joint (53) comporte un passage (53c) entre des chambres adjacentes (46a, 46b), le passage étant commandé par une partie de clapet (53b) du joint pour permettre l'écoulement dans un seul sens F entre les chambres.

6. Volant à double masse selon l'une quelconque des revendications (2) à (5), caractérisé en ce qu'un premier moyen de joint élastique (32) agit entre ladite autre masse de volant (12) et la première plaque annulaire (15) et en ce qu'un second moyen de joint élastique (35) agit entre ladite première masse de volant (11) et la seconde plaque annulaire pour assurer l'étanchéité aux extrémités axiales de la cavité

7. Volant à double masse selon la revendication (6), caractérisé en ce que les deux moyens de joints sont des diaphragmes en acier à ressort (32, 35).

8. Volant à double masse selon l'une quelconque des revendications (1) à (7), caractérisé en ce qu'un moyen d'amortissement à friction (50) agit aussi entre les deux masses (11, 12) de volant, le moyen d'amortissement à friction comprenant un empilage de rondelles à friction (57), certaines desdites rondelles étant entraînées par ladite première masse de volant et les autres rondelles étant entraînées par ladite autre masse de volant.

9. Volant à double masse selon l'une quelconque des revendications (1) à (8), caractérisé en ce qu'une biellette (41) de chaque tringlerie pivotante (40) a une masse supérieure à celle de l'autre biellette (42), de façon que ladite première biellette (41) agisse comme une masse pesante

10. Volant à double masse selon la revendication (4), et l'une quelconque des revendications (5) à (9) lorsqu'elle dépend de la revendication (4), caractérisé en ce que les joints en élastomère (53) agissent aussi comme butées pare-chocs pour amortir toute butée entre les masses de volant (11, 12).

11. Volant à double masse selon la revendication (1), caractérisé en ce qu'un autre moyen d'amortissement visqueux comprend deux éléments rotatifs l'un par rapport à l'autre (61, 64), un premier élément (61) étant rotatif avec une masse de volant (12), et le second élément (64) étant rotatif avec l'autre masse de volant (11), et un milieu d'amortissement visqueux est logé dans une chambre (62) formée par au moins un desdits éléments afin de créer un amortissement visqueux entre lesdits éléments pour s'opposer au mouvement de rotation relative entre eux.

12. Volant à double masse selon la revendication (11), caractérisé en ce qu'un élément (61) de l'autre moyen d'amortissement visqueux forme une chambre annulaire à fluide (62), et ledit second élément (64) est une plaque annulaire portant des pales (67) fixées à sa périphérie extérieure, les pales étant mobiles à travers la chambre annulaire (62).

13. Volant à double masse selon la revendication (12), caractérisé en ce que la chambre annulaire (62) est partagée en cavités cintrées (62A) et en ce que chaque pale (67) est logée dans une cavité correspondante.

14. Volant à double masse selon l'une quelconque des revendications (11) à (13), caractérisé en ce que ledit premier élément (61) porte une bride radialement vers l'extérieur (63) en vue d'une fixation à une des masses de volant (12), et en ce que le second élément (64) porte des pattes (65) dépassant radialement vers l'intérieur pour une fixation à l'autre masse de volant (11).

15. Volant à double masse selon l'une quelconque des revendications (2) à (14), caractérisé en ce que le matériau visqueux est une graisse ayant un taux NLGI de 2 à 3.

16. Volant à double masse selon la revendication (15), caractérisé en ce que la graisse est une graisse synthétique qui est chargée d'un complexe de savon au lithium.

17. Volant à double masse selon l'une quelconque des revendications (2) à (14), caractérisé en ce que le matériau visqueux est un gel.

18. Volant à double masse selon l'une quelconque des revendications (12) à (14), caractérisé en ce que le matériau visqueux est un fluide au silicone ou une graisse au silicone.
